(19) Europäisches Patentamt
European Patent Office
Office européen des brevets

(11) Numéro de publication: **0 157 818**
**B1**

(12) # FASCICULE DE BREVET EUROPEEN

(45) Date de publication du fascicule du brevet: **08.02.89**

(51) Int. Cl.⁴: **C 08 F 8/34**

(21) Numéro de dépôt: **84903488.9**

(22) Date de dépôt: **18.09.84**

(86) Numéro de dépôt international: **PCT/FR 84/00202**

(87) Numéro de publication internationale: **WO 85/01293 (28.03.85** Gazette **85/8)**

(54) **NOUVEAUX DERIVES DE SULFURES DE POLYCARBONE, LEUR PREPARATION ET LEURS APPLICATIONS, NOTAMMENT EN ELECTROCHIMIE.**

(30) Priorité: **20.09.83 FR 8314940**
**28.06.84 FR 8410254**

(43) Date de publication de la demande: **16.10.85 Bulletin 85/42**

(45) Mention de la délivrance du brevet: **08.02.89 Bulletin 89/6**

(84) Etats contractants désignés: **AT BE CH DE FR GB LI LU NL SE**

(56) Documents cités:
**BE-A-445 952**
**FR-A-2 011 812**
**US-A-3 660 362**

**Revue CARBON, vol. 19, p. 175 etc., 1981**

**Le dossier contient des informations techniques présentées postérieurement au dépôt de la demande et ne figurant pas dans le présent fascicule.**

(73) Titulaire: **SOCIETE NATIONALE ELF AQUITAINE, Tour Aquitaine - Cédex 4, F-92080 Paris la Défense (FR)**

(72) Inventeur: **ARMAND, Michel, Domaine Jean Jaurès - Allée Maurice Ravel, F-38130 Echirolles (FR)**
Inventeur: **FOULETIER, Mireille, 2, rue Auguste Ravier, F-38100 Grenoble (FR)**
Inventeur: **DEGOTT, Pierre, 8, route de Lyon, F-38000 Grenoble (FR)**

(74) Mandataire: **Boillot, Marc, SOCIETE NATIONALE ELF AQUITAINE Division Propriété Industrielle Tour Elf, F-92078 Paris la Défense Cédex 45 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 157 818 B1

ACTORUM AG

## Description

L'invention a pour objet de nouveaux dérivés de sulfures de polycarbone, leur préparation et leurs applications, notamment en électrochimie.

On a déjà décrit dans la revue Carbon, volume 19, P. 175 et suivantes, 1981 des complexes superficiels de carbone et de soufre mettant en œuvre la possibilité de créer des liaisons carbone soufre à la surface du carbone formant ainsi des carbones soufres superficiels.

Etant donné cependant les températures élevées mises en œuvre pour leur préparation, de l'ordre de 500 à 800 °C, les chaînes de carbone sont réticulées, ce qui diminue le nombre de sites pouvant être sulfurés. A cet égard, l'étude de ces produits confirme que leur teneur en soufre est au maximum de 40%, donc nettement inférieure à la valeur théorique, entraînant une capacité moindre de ces composés par unité de masse. En outre la mise en œuvre de telles températures élevées conduit à des bilans énergétiques défavorables.

Ces matériaux renferment par ailleurs une proportion importante de thiolactones dont la réduction électrochimique est difficilement réversible, ce qui limite les performances des générateurs comportant des électrodes élaborées à partir de ces matériaux tels que les générateurs du type $Li\text{-}(CS_y)_n$.

L'étude de la sulfuration des chaînes de carbone par les inventeurs les a conduits à constater qu'il est possible de fixer du soufre à des températures nettement inférieures à celles utilisées jusqu'à présent et de développer une famille de sulfures de polycarbone présentant une nouvelle structure.

L'invention a pour but des dérivés sulfurés qui se présentent sous une forme linéaire et non pas sous la forme de dérivés superficiels.

Elle a également pour but de fournir un procédé d'obtention de ces dérivés, exploitable industriellement en raison de son coût modéré et de sa mise en œuvre aisée, à température plus faible que dans les techniques antérieures.

Elle a également pour but les applications électrochimiques de ces dérivés et, en patriculier, leur utilisation pour l'élaboration d'électrodes, notamment pour générateurs électrochimiques primaires ou secondaires.

Les dérivés de l'invention sont caractérisés en ce qu'il s'agit de sulfures de polycarbone comprenant des motifs de formule I:

$$(R_x\,CS_m)_n$$

dans laquelle:

– R représente H, un métal alcalin, notamment Li, Na, K, un élément de transition choisi parmi Ag, Zn, Cu, Co ou analogue;

– x correspond au taux d'insertion de R dans la structure carbone-soufre, et présente une valeur de 0 à m/valence du métal (ces valeurs étant incluses);

– m représente le taux de substitution en soufre avec $0 < m \leqslant 1$, et

– n représente le nombre de motifs présents dans la chaîne polymère carbonée.

L'étude des dérivés ci-dessus montre qu'ils possèdent en analyse IR, un pic d'absorption vers 1639 $cm^{-1}$, ce qui correspond à une valeur caractéristique des systèmes conjugués.

Cette observation conduit à proposer une structure conjuguée de type:

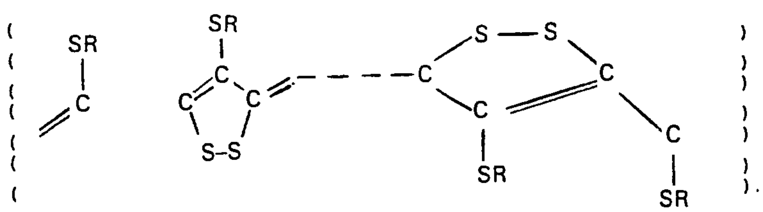

Lorsque x est différent de 0, les composés de l'invention comprennent l'élément R inséré dans la structure ci-dessus qui joue alors le rôle de structure d'accueil.

Des valeurs préférées de x sont supérieures à 0,5.

D'une manière avantageuse, cette insertion est réversible et les éléments R insérés peuvent être libérés sans altération sensible de la structure de la chaîne polymère.

Dans une famille préférée de l'invention, les éléments insérés sont constitués par des métaux alcalins, de préférence Li et Na en raison de leur capacité à diffuser rapidement en phase solide et de leur faible masse équivalente.

Dans une autre famille préférée, R représente un métal de transition choisi parmi Ag, Cu, Zn, Co. D'une manière avantageuse, ces éléments peuvent être en effet retenus dans la structure hôte carbone-soufre des composés de l'invention ce qui permet, par exemple, d'effectuer des récupérations de métaux de transition à partir de solutions diluées, en particulier dans les effluents industriels.

L'invention vise également les sulfures de polycarbone ne comportant pas d'éléments insérés et constituant donc, selon un aspect de grand intérêt, des matériaux de départ pour insérer divers éléments.

Selon une variante de l'invention, les sulfures de polycarbone contiennent en outre des motifs de polyacétylène et se présentent alors sous la forme d'un copolymère de sulfure de polycarbone, tel que représenté par la formule I et d'un polyacétylène, ledit copolymère étant représenté par la formule II:

$$(CH)\,p\,(R_xCS_m)1\text{-}p_n$$

formule dans laquelle R, x, m, ont les mêmes significations que dans la formule I; $0 < p < 1$ et n représente le nombre de motifs dans la chaîne.

Les nouveaux dérivés selon l'invention peuvent être représentés par la formule développée III suivante:

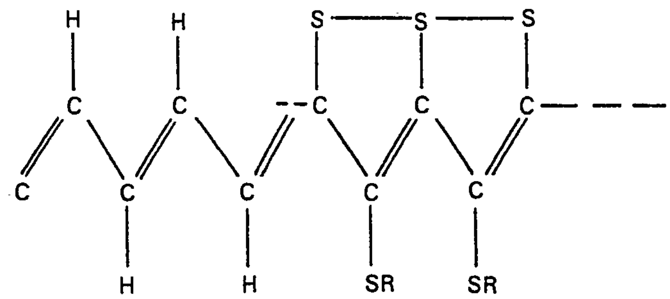

La formule III montre bien que l'on a un produit du type copolymère.

L'élément inséré R peut être avantageusement un métal alcalin, par exemple le lithium ou le sodium, mais il peut être aussi un élément de transition choisi parmi l'argent, le cuivre, le zinc et le cobalt.

De plus, l'invention vise un procédé de préparation des dérivés de sulfures de polycarbone définis ci-dessus.

Selon ce procédé, on fait réagir du soufre, ou un dérivé capable de libérer du soufre, avec un polycarbone réduit.

Il s'agit d'un polycarbone tel que obtenus après réduction d'un polycarbone halogéné tel que le polytétrafluoroéthylène ou PTFE sous l'action d'un métal alcalin.

On considère que cette réaction de réduction conduit à un polycarbone réduit formé de chaînes de carbone linéaire. Ces chaînes comprennent des motifs de structure $-CM_z-$ dans laquelle:

– M représente un métal alcalin, et
– z le taux de l'insertion du métal alcalin sur la chaîne carbonée.

Pour obtenir un taux de substitution élevé en soufre et atteindre, si souhaité, la stoéchiométrie limite, on utilise une quantité appropriée de soufre et on effectue avantageusement la réaction d'addition à température élevée, dans des conditions permettant toutefois de ne pas altérer les liaisons carbone-soufre formées et de ne pas entraîner de réticulation des chaînes du polymère de départ. Des températures allant jusqu'à environ 350 °C, de préférence de l'ordre de 150 à 200 °C conviennent pour réaliser la sulfuration souhaitée.

Selon une disposition préférée de l'invention, la réaction de sulfuration est réalisée en présence d'un catalyseur de sulfuration.

Un taux de substitution plus faible en soufre des chaînes de polycarbone est obtenu en opérant à des températures inférieures à environ 120 °C, éventuellement en l'absence de catalyseur.

Selon un mode préféré de réalisation de l'invention, on obtient des chaînes de polycarbone à forte teneur en soufre, pouvant dépasser 70% en poids de soufre, en soumettant le polymère réduit tout d'abord à une étape de réoxydation sous l'action d'une quantité de soufre inférieure à la stoéchiométrie en opérant à une température voisine de l'ambiante, puis en traitant le produit résultant avec une quantité appropriée de soufre, à température élevée comme indiqué ci-dessus.

Ainsi, pour préparer un dérivé de sulfures de polycarbone renfermant du soufre pratiquement en quantité stoéchiométrique, on procèdera avantageusement comme suit.

Comme polycarbone de départ, on met en œuvre un polymère réduit comprenant des motifs de structure $-CM_z-$ tels que indiqués ci-dessus. Ce polymère est avantageusement obtenu par réaction d'un agent réducteur, plus spécialement d'un métal alcalin M ou d'un dérivé capable de libérer M dans les conditions de la réaction, sur un carbone polymère halogéné, c'est-à-dire formé de chaînes linéaires de carbone substituées par des halogènes.

Ces halogènes sont de préférence choisis parmi le fluor et le chlore.

Des polymères préférés comprennent le polychlorotrifluoroéthylène et plus spécialement le PTFE.

Le métal alcalin est constitué de préférence par du lithium, du potassium ou du sodium.

La réaction de réduction est réalisée de préférence à température ambiante ou à une température voisine de l'ambiante et en milieu solvant organique.

Des solvants organiques appropriés correspondent à des milieux fortement donneurs et comprennent le tétrahydrofuranne (THF), le diméthylformamide (DMF), le tétraméthyléthylène diamine (TMDA), ses homologues et/ou les mélanges de TMDA, ou de ses homologues, avec des solvants de type aromatique tel que le benzène ou le toluène.

Selon une disposition avantageuse de l'invention, le milieu réactionnel renferme une quantité catalytique de composé polyaromatique.

De nombreux composés polyaromatiques peuvent être réduits réversiblement par les métaux alcalins en milieu fortement donneur.

A titre d'exemples, on citera: le naphtalène, le triphénylène, le phénanthrène, le benz(a) pyrène, le pyrène, le benz(a) anthracène, le 9-10-diméthylanthracène, l'anthracène, le benz(e) pyrène, l'acénaphtylène, le fluoranthène, le pérylène.

L'utilisation d'un composé polyaromatique comme intermédiaire de réaction permet notamment d'effectuer la réaction de réduction à potentiel constant et d'en contrôler l'achèvement, la solution réactionnelle renfermant ce composé se décolorant après consommation du métal alcalin.

Ainsi, la réduction, par exemple du naphtalène et solution dans le THF par le lithium donne naissance à un radical anion de couleur verte; celle de la benzophénone par des quantités croissantes de lithium conduit successivement au radical anion (bleu) puis au di-anion (rouge).

Le taux d'insertion, z, dans les motifs de structure $-(CM_z)-$ est fonction de la quantité de métal alcalin introduite et du couple rédox utilisé.

La quantité de métal alcalin doit permettre au moins d'atteindre la stoéchiométrie désirée.

On utilise généralement un excès pour atteindre la stoéchiométrie limite.

Le composé polyaromatique est avantageusement mis en œuvre à raison de 0,1 à 50% molaire de préférence de l'ordre de 1 à 10% molaire par motif polymère.

Par exemple, la réduction de PTFE par le naphtalène lithium en excès conduit à un taux d'insertion limite de l'ordre de 0,25.

On considère que la réaction de réduction conduit à une duplication des chaînes de carbone avec arrangement des atomes de carbone sous forme de cycles aromatiques.

Le polymère réduit obtenu est ensuite soumis à l'action du soufre, ou d'un dérivé capable de libérer le soufre, tels les polysulfures organiques ou alcalins ou encore des halogénures de soufre.

Cette étape d'oxydation est également réalisée à température ambiante et conduit à une fixation de l'ordre de 10 à 25% en poids de soufre environ.

Pour obtenir une sulfuration plus poussée, on soumet le polymère oxydé à l'action d'un agent de sulfuration tel que indiqué ci-dessus, en opérant à température plus élevée, avantageusement de l'ordre de 150 à 200 °C.

La réaction de sulfuration à température élevée est avantageusement réalisée en présence d'un catalyseur, plus spécialement d'un catalyseur de vulcanisation tel que le disulfure de diméthyl (ou diéthyl) thiuram ou le dithiocarbamate de zinc et d'une manière générale tous les composés facilitant la réaction de liaisons carbone-soufre.

Après la sulfuration, il est avantageux d'éliminer par lavage les sous-produits formés. Ces sous-produits sont essentiellement constitués par des halogénures de métaux alcalins formés lors de la réduction de polymère halogéné.

On peut, en outre, utiliser un agent permettant de complexer des sous-produits et/ou le métal alcalin en excès.

Les produits sulfurés ainsi purifiés sont séchés sous vide à des températures de l'ordre de 200 °C environ.

Dans une autre variante, le sulfure de polycarbone est mis en présence à la fois de l'ion considéré qu'on désire insérer et d'un réducteur approprié permettant de réduire la structure du polycarbone et ce dans des conditions permettant de réaliser l'insertion désirée dans le composé carbone-soufre.

Parmi les agents réducteurs qui conviennent, on citera l'hydrogène, le borohydrure de potassium, le diphénylsodium.

Selon un autre mode de réalisation, les sulfures de polycarbone peuvent être obtenus par broyage d'un polymère fluoré en présence d'un métal alcalin ou d'un élément de transition dans un liquide inerte, puis à effectuer la sulfuration du produit obtenu par réaction avec du soufre ou un dérivé capable de libérer du soufre.

Selon des modes de réalisation préférés, le polymère utilisé est un poly(tétrafluoroétylène) ou un poly(trifluorochloroéthylène).

La sulfuration peut s'effectuer à température ambiante.

De manière à obtenir une meilleure fixation de soufre, on peut effectuer la sulfuration à température plus élevée, de l'ordre de 150 à 200 °C en présence d'un agent sulfurant, par exemple un polysulfure organique, un polysulfure alcalin ou encore un halogénure de soufre. Dans ces cas de sulfuration à haute température, on pourra prévoir un catalyseur de vulcanisation usuel.

Les copolymères de sulfure de polycarbone et de polyacéthylène représentés par la formule II peuvent être obtenus directement par sulfuration d'un polyacétylène ou de ses précurseurs par le soufre ou ses dérivés.

Par exemple, on pourra partir de polychlorure de vinyle et effectuer la sulfuration à température ambiante ou encore à température plus élevée de l'ordre de 200 à 300 °C en présence de chlorure de soufre.

Les produits selon l'invention, qu'ils se présentent sous la forme de la formule I ou de la formule II, peuvent se présenter avec une teneur très importante de soufre. Pour cela, il suffit d'effectuer une étape supplémentaire de sulfuration par un halogénure de soufre, ou par du soufre natif. On peut alors obtenir des produits dans lesquels x = 0.

Les dérivés de l'invention, en raison, notamment de leur conductivité élevée, sont avantageusement utilisables comme matériaux d'électrodes.

D'une manière avantageuse, les dérivés de l'invention présentent, comme déjà indiqué, un taux de substitution élevé en soufre ainsi qu'une masse équivalente extrêmement faible.

En raison, en outre, de leur conductivité élevée, ces dérivés, aussi bien les structures hôtes que les composés d'insertion, sont avantageusement utilisables dans des générateurs électrochimiques primaires et secondaires comportant des anodes contenant des métaux alcalins de type Na ou Li.

Compte-tenu de leurs qualités, ces matériaux conduisent à des performances plus élevées que celles obtenues avec les produits carbone-soufre connus jusqu'à présent.

En particulier, il est possible, en utilisant des liants de type polymère, de construire des électrodes utilisables en milieu aqueux pour la récupération sélective de métaux de transition, par exemple, dans les effluents industriels.

Les exemples qui suivent illustrent des modes de réalisation du procédé de l'invention.

Exemple 1

Préparation de sulfures de polycarbone $(R_xCS_m)_n$ dans lesquelles R = H et Li et m = 0,10.

2,010 g (20,10 mM) de PTFE sont mis en suspension dans du THF et réduits par du lithium (636 mg soit 91 mM) en présence de 186 mg de naphtalène. La réaction dure environ une semaine.

On ajoute ensuite 184 mg (5,8 mM) de soufre, et après filtration, on effectue un rinçarge des produits solides à l'aide de THF, puis d'acétonitrile. Afin de complexer le fluorure de lithium contenu dans le produit soufré, on ajoute 13,5 $cm^3$ d'éthérate de trifluorure de bore $BF_3, O(C_2H_5)_2$. Les produits solides sont ensuite rincés à l'acétonitrile et séchés sous vide à 200 °C.

Composition:

C: 55,48%; H: 2,26%; S: 15,44%

F: 17,15%

Li: 1,02%; B: 2,55% (total: 93,80%).

L'excès d'éthérate de trifluorure de bore peut être éliminé par lavage à l'eau.

Exemple 2

Préparation de sulfures de polycarbone $(R_xCS_m)_n$) dans lesquels R = H, x = 0,055 et m = 0,035 ou R = H, x = 0,074 et m = 0,08.

2,100 g (21 mM) de PTFE sont mis en suspension dans du THF et réduits par 3,656 g (93,7 mM) de potassium en présence de 363 g de naphtalène et d'un complexant sélectif du potassium, le dicyclohexyl-18-crown 6 (626 mg). La réaction dure environ 15 jours. 1,616 g (50,5 mM) de soufre sont ajoutés à la suspension; les produits solides sont ensuite filtrés. lavés au THF puis à l'acétonitrile et séchés.

Une aliquote du produit précédent (3,15 g) est mélangé à 725 mg de soufre et portée à 170 °C dans un récipient hermétique. Après réaction (15 h), ce produit est rincé à l'eau distillée puis traité sous vide à 200 °C.

Composition:

C: 44,93%; H: 2,06%; S: 42,63%;

K: 2,74%; F: 3,26% (total: 95,64%)

IR: 2930 – 2850 – 1630 – 1450 – 1360 – 1240 – 1140 – 1090 – 1050 – 290 – 620.

Une autre aliquote (3,00 g) est lavée à l'eau distillée, puis à l'acétone et traitée sous vide à 200 °C.

Composition:

C: 60,66%; H: 3,76%; S: 13,03%;

F: 6,26%; K: 2,95% (total: 86,66%)

Exemple 3

Préparation de polysulfure de carbone dans lesquelles R = H, x = 0,19 et m = 0,89.

1,010 g (10,1 mM) de PTFE en suspension dans du THF sont réduits par 1,652 g (42,4 mM) de potassium en présence de 200 mg de naphtalène. Après réaction (15 jours), 711 mg (22,2 mM) de soufre et de disulfure de diméthylthiuram sont ajoutés à la solution. Après plusieurs jours de réaction, les produits solides sont séparés, mélangés à 646 mg de soufre (20,2 mM) et portés durant 15 h à 200 °C dans un récipient hermétique.

Les produits obtenus sont rincés à l'eau distillée puis à l'acétone et traités sous vide à 200 °C.

Composition:

C: 27,61%; H: 0,44%; K: 1,04%

F: 5,27%; S: 64,70% (total: 99,06%)

IR: 3400 – 3100 (?) – 2900 (?) – 2320 – 1640 – 1500 – 1340 $cm^{-1}$.

Exemple 4

Etude du comportement électrochimique du polymère de l'exemple 3.

On utilise la cellule à électrolyte solide suivante:

$- Li/(POE)_8, LiC1O_4/(H_{0,19}\ CS_{0,89})_n$

POE représentant un motif poly(oxyde d'éthylène).

On opère à 85 °C.

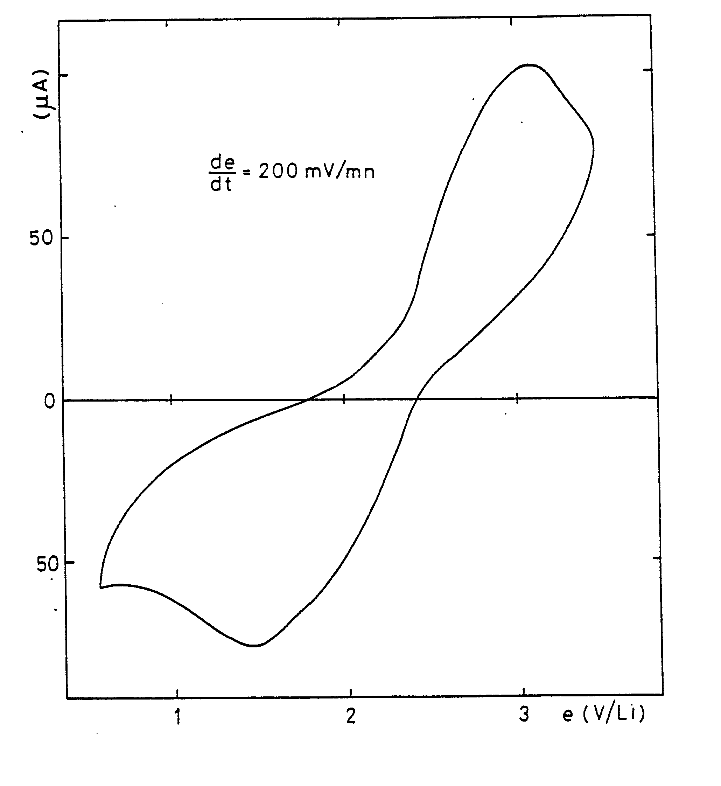

Comme le montre la courbe représentée sur la figure unique, on obtient en voltamétrie cyclique une courbe parfaitement stable au cours de cycles successifs.

La tension d'abandon du système (2,33 V) est très voisine de la tension e(i=0) observée au balayage retour (produit réoxydé). Cette tension est légèrement inférieure à celle du couple $Li_2S/S$:

$$e = 2,48\ V\ (vsLi/Li^+).$$

Exemple 5

Utilisation du matériau de l'exemple 3 pour récupérer Ag – 0,5 g du matériau préparé selon l'exemple 3 est mélangé avec 0,2 ml d'une suspension de PTFE pour constituer une électrode par pressage sur une grille d'acier inoxydable. Un courant de 10 mA est imposé entre cette électrode et une contre-électrode de graphite immergée dans une solution $10^{-3}$ M d'$Ag^+$. Ce courant est imposé pendant 15 h. La concentration résiduelle d'$Ag^+$ dans la solution est alors inférieure à $10^{-5}$ moles/litre.

Exemple 6

Elaboration d'un dérivé du type $R_xCS_m$, 2 g de polytrifluorochloroéthylène PTFCE et 0,53 g de lithium sont broyés en présence de 20 cc d'hexane dans un broyeur à billes pendant 45 mm. Le produit de réaction, filtré et séché sous argon est mélangé à 1,1 g de soufre puis chauffé en ampoule scellée à 250 °C. Le produit final est lavé à l'eau pour éliminer les sels alcalins. Le produit obtenu répond à la formule suivante:

$$CS_{0,98}H_{0,009}$$

Exemple 7

Elaboration d'un copolymère de formule II par sulfuration de poly(acétylène), 1 g de polyacétylène est traité à 220 °C par 1,3 g de vapeur de monochlorure de soufre. Le produit obtenu correspond à la formule:

$$\left[(CH)_{0,76}CS_{0,24}\right]_n$$

**Revendications**

1. Dérivés de sulfures de polycarbone, caractérisés en ce qu'ils comprennent des motifs de formule I:

$$(R_x\,CS_m)$$

dans laquelle:

– R représente H, un métal alcalin, notamment Li, Na, K, un élément de transition tel que Ag, Zn, Cu, Co ou analogue,

– x correspond au taux d'insertion de R dans la structure carbone-soufre, et présente une valeur de 0 à m/valence du métal (ces valeurs étant incluses),

– m représente le taux de substitution en soufre avec $0 < m \leqslant 1$.

2. Dérivés selon la revendication 1, caractérisés en ce que R représente un métal alcalin choisi parmi Li ou Na.

3. Dérivés selon la revendication 1, caractérisés en ce que R représente un élément de transition choisi parmi Ag, Cu, Zn, Co.

4. Dérivés selon la revendication 1, caractérisés en ce que $x = 0$.

5. Procédé de préparation de dérivés selon la revendication 1 et dans lesquels R représente un métal alcalin, caractérisé en ce qu'on fait réagir du soufre, ou un dérivé capable de libérer du soufre, avec un polycarbone réduit formé de chaînes de carbone linéaire comprenant des motifs de structure $-(CM_z)-$ dans laquelle M représente un métal alcalin et z le taux d'insertion du métal alcalin sur la chaîne carbonée.

6. Procédé selon la revendication 5, caractérisé en ce qu'on utilise un excès de soufre par rapport à la stoéchiométrie et qu'on effectue la réaction à des températures allant jusqu'à 350 °C, de préférence de l'ordre de 150 à 200 °C, et en présence d'un catalyseur.

7. Procédé selon la revendication 5, caractérisé en ce qu'on opère à des températures inférieures à environ 120 °C, éventuellement en l'absence de catalyseur.

8. Procédé selon la revendication 5, caractérisé en ce qu'on soumet tout d'abord le polymère réduit à une étape de réoxydation sous l'action d'une quantité de soufre inférieure à la stoéchiométrie, en opérant à température ambiante, puisqu'on traite le produit résultant avec du soufre à une température plus élevée pouvant aller jusqu'à 350 °C, de préférence de 150 à 200 °C.

9. Electrodes utilisables dans des générateurs électrochimiques primaires ou secondaires, caractérisées en ce qu'elles comprennent un dérivé de sulfure de polycarbone selon l'une quelconque des revendications 1 à 4 et un liant, par exemple de type polymère.

10. Application des électrodes, selon la revendication 9, élaborées à partir d'un dérivé de sulfure de polycarbone dans lequel $x = 0$, pour la récupération sélective de métaux de transition, en particulier, dans les effluents industriels.

11. Dérivés sulfurés de carbone linéaire, caractérisés en ce qu'ils se présentent sous la forme d'un copolymère d'acétylène et d'un sulfure de carbone linéaire substitué représenté par la formule (I):

$$(R_x\,CS_m)$$

dans laquelle:

– R représente H, un métal alcalin ou un élément de transition choisi parmi Ag, Cu, Zn, Co,

– x représente le taux d'insertion de R dans la structure du polycarbone linéaire et est compris entre 0 et m/valence du métal, ces valeurs étant incluses,

– m représente le taux de substitution en soufre et est compris entre 0 et 1 avec $0 < m \leqslant 1$, se présentant sous la formule II:

$$\left[(CH)_p\,(R_x\,CS_m)\;1\text{-}p)\right]_n$$

formule dans laquelle R, x, m, ont la même signification que dans la formule I, p est compris entre 0 et 1, ces deux valeurs étant exclues.

12. Dérivés selon la revendication 11, caractérisés en ce que R est un métal alcalin choisi parmi le lithium et le sodium.

13. Procédé de préparation de dérivés sulfurés de carbone linéaire comprenant des motifs représentés par la formule II:

$$(CH_p\,(R_x\,CS_m)_{(1\text{-}p)}$$

dans laquelle:

– R représente H, un métal alcalin ou un élément de transition,

– x représente le taux d'insertion de R dans la structure de polycarbone linéaire et est compris entre 0 et m/valence du métal, ces valeurs étant incluses,

– m représente le taux de substitution en soufre et est compris entre 0 et 1, avec $0 < m \leqslant 1$,

– p est compris entre 0 – non inclus – et 1, caractérisé en ce qu'il comporte une étape de sulfuration par le soufre ou un de ses dérivés, d'un polyacétylène ou d'un de ses précurseurs.

14. Procédé de préparation de dérivés sulfurés de carbone linéaire représentés par la formule I: $(R_xCS_m)$, dans laquelle

– R représente H, un métal alcalin, notamment Li, Na, K, un élément de transition tel que Ag, Zn, Cu, Co ou analogue,

– x correspond au taux d'insertion de R dans la structure carbone-soufre, et présente une valeur de 0 à m/valence du métal (ces valeurs étant incluses),

– m représente le taux de substitution en soufre avec $0 < m \leqslant 1$, caractérisé en ce qu'il comporte une étape de broyage d'un polymère fluoré en présence d'un métal alcalin ou d'un élément de transition dans un liquide inerte, ledit élément de transition étant choisi parmi Ag, Cu, Zn, Co.

15. Procédé selon la revendication 14, caractérisé en ce qu'il comporte une étape de sulfuration du produit obtenu par réaction avec du soufre ou un dérivé capable de libérer du soufre.

**Patentansprüche**

1. Schwefelpolykohlenstoffderivate, dadurch gekennzeichnet, dass sie Struktureinheiten der Formel I

$$(R_x\,CS_m)$$

umfassen, wobei

– R H, ein Alkalimetall, insbesondere Li, Na, K, ein Übergangselement wie Ag, Zn, Cu, Co oder ein Analogon bedeutet,

– x dem Einschubgrad an R in der Kohlenstoff-Schwefelstruktur entspricht und einen Wert von 0 bis m/Wertigkeit des Metalls (diese Werte sind eingeschlossen) darstellt und

– m den Substitutionsgrad an Schwefel mit $0 < m \leqslant 1$ darstellt.

2. Derivate nach Anspruch 1, dadurch gekennzeichnet, dass R ein Alkalimetall darstellt, ausgewählt aus der Gruppe Li oder Na.

3. Derivate nach Anspruch 1, dadurch gekennzeichnet, dass R ein Übergangselement darstellt, ausgewählt aus der Gruppe Ag, Cu, Zn, Co.

4. Derivate nach Anspruch 1, dadurch gekennzeichnet, dass $x = 0$.

5. Verfahren zur Herstellung von Derivaten nach Anspruch 1, worin R ein Alkalimetall darstellt, dadurch gekennzeichnet, dass man Schwefel oder ein Derivat, das Schwefel freizusetzen vermag, mit einem reduzierten Polykohlenstoff umsetzt, der aus Ketten aus linearem Kohlenstoff gebildet ist, die Struktureinheiten $-(CM_z)-$ umfassen, wobei M ein Alkalimetall darstellt und z den Einschubgrad des Alkalimetalls in die Kohlenstoffkette.

6. Verfahren nach Anspruch 5, dadurch gekennzeichnet, dass man einen Überschuss an Schwefel in bezug auf die Stöchiometrie verwendet und die Umsetzung bei Temperaturen von bis zu 350 °C, vorzugsweise von 150 bis 200 °C, und in Anwesenheit eines Katalysators durchführt.

7. Verfahren nach Anspruch 5, dadurch gekennzeichnet, dass man es bei Temperaturen unter ca. 120 °C, gegebenenfalls in Abwesenheit eines Katalysators durchführt.

8. Verfahren nach Anspruch 5, dadurch gekennzeichnet, dass man zuerst das reduzierte Polymer einer Reoxydationsstufe unter Einwirkung einer Schwefelmenge unterhalb der Stöchiometrie bei Umgebungstemperatur unterwirft, wonach man das erhaltene Produkt mit Schwefel bei erhöhter Temperatur, die bis 350 °C reichen kann, und vorzugsweise von 150 bis 200 °C behandelt.

9. In primären oder sekundären elektrochemischen Generatoren verwendbare Elektroden, dadurch gekennzeichnet, dass sie ein Schwefelpolykohlenstoffderivat nach einem der Ansprüche 1 bis 4 und ein Bindemittel wie z.B. vom Polymertyp umfassen.

10. Verwendung der Elektroden nach Anspruch 9, hergestellt ausgehend von einem Schwefelpolykohlenstoffderivat, bei dem $x = 0$ bedeutet, zur selektiven Rückgewinnung von Übergangsmetallen, insbesondere aus Industrieabwässern.

11. Schwefelderivate von linearem Kohlenstoff, dadurch gekennzeichnet, dass sie ein Copolymerisat aus Acetylen und einem substituierten Sulfid von linearem Kohlenstoff der Formel (I):

$$(R_x\,CS_m)$$

darstellen, wobei

– R H, ein Alkalimetall oder ein Übergangselement, ausgewählt aus der Gruppe Ag, Cu, Zn, Co, bedeutet,

– x den Einschubgrad an R in der Struktur des linearen Polykohlenstoffs darstellt und von 0 bis m/Wertigkeit des Metalls reicht, wobei diese Werte eingeschlossen sind, und

– m den Substitutionsgrad an Schwefel bedeutet und einen Wert von 0 bis 1 umfasst, wobei $0 < m \leqslant 1$, entsprechend der Formel (II):

$$\left[(CH)_p\,(R_x\,CS_m)1\text{-}p)\right]_n$$

worin R, x und m dieselbe Bedeutung haben wie in Formel I und p einen Wert von 0 bis 1 bedeutet, wobei diese zwei Werte ausgeschlossen sind.

12. Schwefelderivate nach Anspruch 11, dadurch gekennzeichnet, dass R ein Alkalimetall darstellt, ausgewählt aus der Gruppe Li oder Na.

13. Verfahren zur Herstellung von Sulfidderivaten von linearem Kohlenstoff, die Struktureinheiten der Formel II

$$(CH)_p\,(R_x\,CS_m)_{(1-p)}$$

umfassen, worin

– R H, ein Alkalimetall oder ein Übergangselement darstellt,

– x dem Einschubgrad an R in der Struktur des linearen Polykohlenstoffs darstellt und von 0 bis m/Wertigkeit des Metalls reicht, wobei diese Werte eingeschlossen sind,

– m den Substitutionsgrad an Schwefel bedeutet und einen Wert von 0 bis 1 umfasst, wobei $0 < m \leqslant 1$,

– p einen Wert von 0 (nicht eingeschlossen) bis 1 darstellt, dadurch gekennzeichnet, dass es eine Stufe der Schwefelung eines Polyacetylens oder eines seiner Vorläufer mit Schwefel oder einem seiner Derivate umfasst.

14. Verfahren zur Herstellung von Sulfidderivaten mit linearem Kohlenstoff der Formel I $(R_xCS_m)$, worin

– R H, ein Alkalimetall, insbesondere Li, Na, K, ein Übergangsmetall wie Ag, Zn, Cu, Co oder ein Analogon bedeutet,

– x dem Einschubgrad an R in der Kohlenstoffschwefelstruktur entspricht und einen Wert von 0 bis m/Wertigkeit des Metalls (diese Werte sind eingeschlossen) darstellt und

– m den Substitutionsgrad an Schwefel mit $0 < m \leqslant 1$ darstellt, dadurch gekennzeichnet, dass es eine Stufe der Vermahlung eines Fluorpolymers in Anwesenheit eines Alkalimetalls oder eines Übergangselements in einer inerten Flüssigkeit umfasst, wobei das Übergangsmetall ausgewählt ist unter der Gruppe Ag, Cu, Zn, Co.

15. Verfahren nach Anspruch 14, dadurch gekennzeichnet, dass es eine Stufe der Schwefelung des durch Umsetzung mit dem Schwefel oder einem Derivat, das Schwefel freizusetzen vermag, erhaltenen Produktes umfasst.

## Claims

1. Polycarbon sulphide compounds characterised in that they comprise units of the formula

$$(R_x CS_m)_n)$$

wherein:

– R represents H, an alkali metal, in particular Li, Na, K, a transition element such as Ag, Zn, Cu, Co or the like,

– x represents the degree to which R is present in the carbon-sulphur structure and has a value from 0 to m/valency of the metal, these values being inclusive,

– m represents the degree of substitution with sulphur, with $0 < m \leqslant 1$.

2. Compounds according to claim 1, characterised in that R represents an alkali metal selected from Li and Na.

3. Compounds according to claim 1, characterised in that R represents a transition element selected from Ag, Cu, Zn an Co.

4. Compounds according to claim 1, characterised in that $x = 0$.

5. Process for the preparation of compounds according to claim 1 and for which R represents an alkali metal, characterised in that it comprises reacting sulphur or a compound capable of releasing sulphur with a reduced polycarbon compound formed by linear carbon chains comprising units having the structure $-(CM_z)-$ in which M represents an alkali metal and z represents the degree to which the alkali metal is present in the carbon chain.

6. Process according to claim 5, characterised in that an excess of sulphur is used relatively to the stoichiometric amount and the reaction is carried out at temperatures up to 350 °C, preferably of the order of 150 to 200 °C, and in the presence of a catalyst.

7. Process according to claim 5, characterised in that the reaction is carried out at temperatures below about 120 °C, possibly in the absence of a catalyst.

8. Process according to claim 5, characterised in that the reduced polycarbon compound is first submitted to a re-oxidation step under the action of an amount of sulphur less than the stoichiometric amount, operating at ambient temperature and the resulting product is then treated with sulphur at a higher temperature, wherein said higher temperature is a temperature up to 350 °C, preferably in the range 150 to 200 °C.

9. Electrodes suitable for use in primary or secondary electrochemical generators, characterised in that they comprise a polycarbon sulphide compound according to any of claims 1 to 4 and a binder, said binder being for example a polymer.

10. Application of electrodes according to claim 9, obtained from a polycarbon sulphide compound in which $x = 0$, for the selective recovery of transition metals, in particular, from industrial effluents.

11. Linear sulphuretted carbon compounds, characterised in that they are in the form of a copolymer of acetylene and a linear substituted carbon sulphide having the formula (I)

$$(R_x CS_m)$$

in which:

– R represents H, an alkali metal or a transition element selected from Ag, Cu, Zn, Co,

– x represents the degree to which R is present in the structure of the linear polycarbon and is between 0 and m/valency of the metal, these values being inclusive, and

– m represents the degree of substitution with sulphur and is between 0 and 1 with $0 < m \leqslant 1$, the said copolymer having the formula (II)

$$\left[(CH)_p (R_x CS_m) (1\text{-}p)\right]_n$$

in which R, x, m have the same meaning as in formula I and p is between 0 and 1, these limits being excluded.

12. Compounds according to claim 1, characterised in that R is an alkali metal selected from lithium and sodium.

13. Process for the preparation of linear sulphuretted carbon compounds comprising units of the formula II

$$(CH_p (R_x CS_m)_{(1\text{-}p)}$$

in which:

– R represents H, an alkali metal or a transition element,

– x represents the degree to which R is present in the structure of the linear polycarbon and is between 0 and m/valency of the metal, these values being inclusive,

– m represents the degree of substitution with sulphur and is between 0 and 1 with $0 < m \leqslant 1$, and

– p is between 0 and 1, but not equal to zero, characterised in that is comprises the step of sulphuretting a polyacetylene or a precursor thereof using sulphur or a derivative thereof as a sulphuretting agent.

14. Process for the preparation of linear sulphuretted carbon compounds with the formula I:

$$(R_xCS_m)$$

in which:

– R represents H, an alkali metal, in particular Li, Na, K, a transition element such as Ag, Zn, Cu, Co or the like,

– x represents the degree to which R is present in the carbon/sulphur structure and has a value ranging from 0 to m/valency of the metal, these values being inclusive,

– m represents the degree of substitution with sulphur and is such that $0 < m \leqslant 1$, characterised

in that it includes the step of grinding a fluorinated polymer in an inert liquid in the presence of an alkali metal or a transition element selected from Ag, Cu, Zn, Co.

15. Process according to claim 14, characterised in that it comprises the step of sulphuretting the product obtained, by reacting it with sulphur or a derivative capable of releasing sulphur.

1/1